# EUROPÄISCHE PATENTSCHRIFT

(11) **EP 0 717 666 B1**
(45) Veröffentlichungstag und Bekanntmachung des Hinweises auf die Patenterteilung: **08.12.1999**
(21) Anmeldenummer: 94926087.1
(22) Anmeldetag: 08.09.1994
(51) Int. Cl.: B08B 1/04, A46B 7/02, B23G 9/00

(54) **STUFENLOS VERSTELLBARER BÜRSTENTRÄGER**
CONTINUOUSLY ADJUSTABLE BRUSH CARRIER
PORTE-BROSSE REGLABLE EN CONTINU

(30) Priorität: 10.09.1993 DE 9313722 U
(43) Veröffentlichungstag der Anmeldung: 26.06.1996
(73) Patentinhaber: Beissner, Hans-Wilhelm, 21723 Hollern (DE)
(72) Erfinder: BEISSNER, Hans-Wilhelm, D-21723 Hollern (DE); FREYMANN, Wilfried, D-52224 Stolberg (DE)
(74) Vertreter: Leonhard, Frank Reimund, Dipl.-Ing.
(86) Internationale Anmeldenummer: DE9401034
(87) Internationale Veröffentlichungsnummer: WO9507151

(56) Entgegenhaltungen:
- EP-A- 0 354 247
- DE-A- 3 930 841
- DE-A- 4 037 944
- DE-U- 9 313 723
- FR-A- 2 671 745
- US-A- 2 635 393
- US-A- 3 290 711

## Beschreibung

Die Erfindung betrifft eine tragbare Rotations-Bürsten-Reinigungseinrichtung zur Gewindereinigung. Solche Gewinde sind in Armaturen, Flanschverbindungen, Turbinen, Pumpen etc., oft nur in geringem Abstand angeordnet und müssen bei Wartungsarbeiten regelmäßig gereinigt werden. Die Bolzen, auf denen die Gewinde angebracht sind oder die Durchmesser von mutterförmigen Innengewinden variieren in großem Maße, abhängig von dem Druck und den Kräften, die mit den Schrauben oder Muttern aufgebracht werden müssen. Ein üblicher Abstand von solchen Bolzen im Kontrollbereich von Kernkraftwerken liegt bei etwa 4cm, meist sogar weniger.

Ein transportables und handhabbares Bürsten-Reinigungsgerät für die Hand-Nachbearbeitung solcher Gewindebolzen ist **in der DE-A 40 37 944** beschrieben. Dieses Reinigungsgerät kann an einen motorischen Antrieb angesetzt werden und hat einen Rohrkörper, der frei drehbar gelagert ist. An dem einen Ende des Rohrkörpers ist der motorische Antrieb über ein Zapfen-Kupplungselement (dort 15) als Antriebs-Anschlußzapfen in der Symmetrieachse lösbar angebracht. Am anderen Ende des Rohrkörpers ist ein Bürstenhalter (dort 21) vorgesehen, in den mehrere leistenförmige Bürstenelemente in vorbestimmtem Umfangsabstand eingesetzt sind. Die Bürstenelemente sind zwar auswechselbar, jedoch radial unverrückbar in einer Nut (dort 20, 31) eingesetzt. Nachdem alle umfänglich verteilten Bürstenelemente nach innen ragen, wird ein Bolzendurchmesser definiert, den die gerade eingesetzten Bürsten gründlich und zuverlässig reinigen können. Dazu wird der Rohrkörper von dem motorischen Antrieb angetrieben und treibt die umfänglich verteilten Bürsten über das Bolzengewinde. Die Bürsten greifen bei richtiger Stahlborstenlänge und zutreffendem Gewindedurchmesser bis auf den Nutgrund des (beispielhaften) Außengewindes und können so eine zuverlässige Reinigung sicherstellen. Eine Absaugeinrichtung kann an einem gerätefesten Gehäuse (dort 4) verbunden sein, in letzterem ist der Rohrkörper drehbar gelagert. Im hinteren Teil des gerätefesten Gehäuses (4) ist eine Strömungsverbindung vom Absauganschluß zum Inneren des drehbaren Rohrkörpers über eine Ringkammer und Öffnungen im hinteren Teil des Rohrkörpers geschaffen. Von den Bürsten abgetrennter Schmutz und andere Korrosionsbestandteile werden so zuverlässig durch das Innere des Rohrkörpers zum Absauganschluß abgesaugt. Aus **DE-A 39 30 841** ist eine Nachschneidevorrichtung bekannt, die Schneidkörper über unsymmetrische Nocken eines Zylinders radial verstellt. Sinn und Zweck dieser Vorrichtung ist das Nachschneiden bzw. Reparieren von beschädigten Außengewinden (vgl. dort Spalte 4, Zeilen 4 ff und zur Funktion Spalte 4, Zeilen 9 ff.).

Die Erfindung hat es sich **zur Aufgabe gemacht**, die Vielseitigkeit eines eingangs genannten Gerätes dadurch zu verbessern, daß leistenförmige Bürstenelemente nicht mehr ausgetauscht werden müssen, wenn unterschiedliche Bolzengewinde oder Innengewinde gereinigt werden müssen oder entsprechend der Abnutzung der Bürsten neue an ihre Stelle treten müssen. Die Erfindung erreicht dieses Ziel mit den im Anspruch 1 oder 11 festgehaltenen Merkmalen.

Das dort aufgezeigte Prinzip beruht auf zwei stufenlos gegeneinander drehbaren Zylinderorganen (Bürstenhalter und Verstellorgan), die konzentrisch angeordnet sind; einer davon ist als Bürstenhalter mit mindestens zwei Radial-Einschnitten ausgebildet, der andere als stufenlos drehbares Verstellorgan mit mindestens zwei den Radial-Einschnitten umfänglich zugeordneten Nocken. Die konzentrische Anordnung ergibt eine Symmetrieachse, in der ein Anschlußzapfen liegt oder zu der konzentrisch ein Drehkraft-Kopplungs-Abschnitt vorgesehen ist; sie sind an dem Zylinderorgan mit Bürstenhalterfunktion angeordnet. In die Radial-Einschnitte sind leistenförmige Bürsten (Anspruch 12) einsetzbar, an denen die Nocken angreifen.

Die Erfindung ist anwendbar auf Innengewinde und Außengewinde, dies hängt allein von der Orientierung der leistenförmigen Bürsten (Anspruch 12, 13) ab, ob sie mit ihren Stahlborsten radial einwärts oder radial auswärts ragen. Demgemäß ist auch das zylindrische Verstellorgan entweder innerhalb oder außerhalb des Zylinder-Bürstenhalters (Anspruch 2).

Ein vorteilhafter Effekt dieser Erfindung liegt in der Reduzierung der Verletzungsgefahr, weil ein relatives Verstellen der beiden zylindrischen Organe bereits alleine eine Veränderung der Ausrichtung der Stahlborsten-Enden der leistenförmigen Bürsten erlaubt, was durch die den Radial-Einschnitten zugeordneten unsymmetrischen Nocken (Anspruch 4, Anspruch 5) erreicht wird, die die leistenförmigen Bürstenelemente in radialer Richtung verstellen (Anspruch 11). Damit können stark unterschiedliche Gewindedurchmesser (Innen- und Außengewinde) bearbeitet werden, und zwar mit denselben Bürstenleisten. Der Benutzer muß nicht - wie im Stand der Technik aufgezeigt - einen jeweiligen Bürstensatz mit einer bestimmten Stahlborstenlänge verwenden, um diese unterschiedlichen Gewinde reinigen zu können. Vielmehr bedarf es nur der Verstellung der beiden Zylinderorgane, um veränderte Gewindedurchmesser reinigen zu können. Damit sinkt die Verletzungsgefahr. Benutzer müssen keine Stahlbürsten mehr austauschen, das Austauschen reduziert sich auf den Augenblick, in dem die stufenlos verstellbaren leistenförmigen Bürsten abgenutzt sind und ein neuer Satz dieser Bürsten in das Gerät eingelegt werden soll.

Das Austauschen der Leistenbürsten geschieht durch Abziehen des Außenzylinders von dem Innenzylinder (bei der Außengewinde-Reinigungsanordnung), womit die stirnseitig offenen Radial-Einschnitte freigelegt werden und die Leistenbürsten durch einfaches Schütteln der Reinigungseinrichtung vorne herausfallen; der Benutzer muß die stark abgenutzten und in ihren Stahlborsten gefährlich in alle Richtungen ragenden Bürsten dabei nicht einmal mehr anfassen. Anspruch 10 verdeutlicht dies, indem eine stirnseitig angeordnete Ringscheibe vorgesehen ist, die mit dem Zylinder-Verstellorgan fest oder lösbar verbunden ist. Die zentral offene Ringscheibe mit einem Ringbereich sperrt stirnseitig die Radialeinschnitte
- das ist die Betriebsstellung - und bei Abnehmen des Außenzylinders zusammen mit der daran angeordneten Stirnscheibe
- das ist die Austauschstellung - können die Bürsten vorne herausgenommen werden.

Hand in Hand mit diesem Vorteil geht die Vereinheitlichung von leistenförmigen Bürsten. Eine bestimmte Bürstenform (Ansprüche 12 und 13) mit einem trapezförmigen Bürstenrücken und einem etwa rechteckigen Haltebereich senkt aufgrund größerer Herstell-Stückzahl die Kosten für die einheitlichen Bürsten. Nicht mehr benötigt werden Bürstenleisten mit unterschiedlicher Borstenlänge. Das vereinfacht die Fertigung und senkt die Kosten für die verwendeten Bürstenelemente.

Die Werkstoffe, aus denen der Bürstenrücken gefertigt sein kann, können Blech oder glasfaserverstärkter Kunststoff sein (Anspruch 14).

Unterstützend zur Reinigung kann ein Absaugsystem eingesetzt werden (Anspruch 8, Anspruch 9), bei dem ein Luftabsaugstutzen zu einem Ringraum Verbindung hat, der in einem hinteren Ringelement innen angeordnet ist. Der im Ringelement drehbar gelagerte oder geführte Bürstenhalter kann dazu innen hohl sein und an seinem hinteren Ende Bohrungen aufweisen, die axial dem Ringraum zugeordnet sind. Damit entsteht ein freier Luft-Durchtrittsweg - auch bei drehendem Bürstenhalter -, der ein Absaugen des im vorderen Bereich an den Bürstenelementen anfallenden Schmutzes und der dort abgebürsteten Korrosionsbestandteile ermöglicht. Wird der Bürstenreiniger in KKWs (Kernkraftwerken) eingesetzt, so verhindert ein Absaugen die Kontamination.

Auf die stufenlose Verstellbarkeit soll noch einmal eingegangen werden. Sie wird durch eine bestimmte Nockenform (Anspruch 4) begünstigt, die periodisch am Umfang des Zylinder-Verstellorgans angeordnet ist (Anspruch 3). Haben die Radialeinschnitte einen den leistenförmigen Bürsten im Bürstenrücken entsprechenden Querschnitt, so können sie radial darin bewegt werden, was die unsymmetrischen Nocken bei Verdrehen des Bürstenhalters gegenüber dem Verstellorgan oder vice versa erreichen. Dabei ist es günstig, wenn die stetig ansteigende Flanke des unsymmetrischen Nockens an einer hinteren Kante der Bürstenleiste anliegt, um eine leichtgängige Verstellung zu erreichen.

Häufig werden drei Bürsten am Umfang verteilt sein, es können auch vier oder mehr umfänglich am Zylinder-Bürstenhalter in entsprechenden Radial-Einschnitten anwesend sein. Eine dementsprechende Erhöhung der Nockenzahl ist die Folge.

Auf eine besondere Gestaltung der Radialeinschnitte, die sich in axialer Richtung in vernünftiger Länge erstrecken, soll eingegangen werden (Anspruch 6). Die axiale Erstreckung der radialen Abschnitte wird in der Regel zwischen 5 und 10 cm liegen, abhängig von der Länge der Bürstenleiste (Anspruch 12). Hat die Bürstenleiste eine Form, wie sie mit einem trapezförmigen Bürstenrücken beschrieben werden kann (Anspruch 12, 13) so bietet sich die Möglichkeit, diese Trapezform mit radial einwärts weisenden Schrägen an den Radialeinschnitten vorzusehen. Dann wird ein leichtes Gleiten der Bürste in diesen Einschnitten ermöglicht; gleichzeitig auch ein sicherer axialer Halt der leistenfömigen Bürsten. Wenn im vorderen Bereich ein schmäleres Nutstück zum Stirnende hin vorgesehen ist, können die Bürsten nicht leicht vorne herausfallen, sie werden vielmehr erst durch Schütteln des Gerätes gelöst oder durch ein Handanlegen am Bürstenrücken der Leistenbürsten, um sie etwas aus dem konischen Bereich radial nach außen zu bewegen. Dann können sie über das schmälere vorderseitige Ende hinweggeschoben und ausgetauscht werden. Das Austauschen wird nach Abziehen des Außenzylinders möglich, der über eine einfach zu lösende Halterungseinrichtung mit dem Innenzylinder oder mit einem ringförmigen Zwischenstück verbunden ist (mittelbar oder unmittelbar).

Es sei allerdings betont, daß eine solche trapezförmige Rückengestaltung der Bürsten nicht für den Erfolg der Erfindung notwendig ist, vielmehr auch anders gestaltete Bürstenrücken (beispielsweise hammerkopfartige Bürstenrücken) eine stufenlose Verstellbarkeit erlauben und auch die schlitzförmige Verengung im Stirnbereich nicht unbedingt erforderlich, aber vorteilhaft ist. Läßt man sie gänzlich entfallen, so können die Leistenbürsten bis fast an die Stirnseite reichen; eine Reinigung bis fast an das Bolzenende wird möglich.

Das antriebsseitig (am anderen Ende der Stirnseite der Reinigungseinrichtung) angeordnete Ringelement, das den innenliegenden nutförmigen Luftabsaug-Kanal aufweist, kann aus Teflon gefertigt sein. Die beiden Zylinderhülsen und die Zentrierscheibe sowie die unsymmetrischen Nocken im stirnseitigen Ende können aus Aluminium-Normstahl oder veredeltem Stahl gefertigt sein, ihre axiale Länge kann von der Antriebskraft der transportablen Antriebseinheit (am Anschlußbolzen) abhängig gemacht werden, sie kann auch abgestimmt sein auf die maximale Länge der zu reinigenden Stehbolzen oder Innengewinde.

Anspruch 15 verdeutlicht, daß eine bevorzugte Gestaltung die Reinigung von Bolzen-Außengewinden betrifft. Dabei liegt der Zylinder-Bürstenhalter radial innen, umgeben von dem Verstellzylinder, dessen unsymmetrische Nocken auf die Bürstenelemente einwirken, die im vorderen Abschnitt des Bürstenhalters in die Radial-Einschnitte eingesetzt sind. Unter unsymmetrischen Nocken versteht die Erfindung eine Unsymmetrie in Umfangsrichtung. Die Nocken haben keinen gleichen steigenden und fallenden Bereich, sondern einen langsam ansteigenden Bereich zum Ausüben von Radial-Verstellkräften auf die Bürsten und einen nach Erreichen der Nockenkuppe sofort und steil abfallenden Bereich, der mit dem Bürstenrücken nicht in Berührung kommt. Der steil abfallende Bereich kann auch seichter abfallend gestaltet werden, nur wird dann wertvoller umfänglicher Verstellweg verschenkt, da der steiler als der ansteigende Bereich abfallende Abschnitt der unsymmetrischen Nocke keine Radial-Verstellkräfte auf die Bürsten aufbringt. Sie wären zu hoch, um die noch bestehenden Reibungskräfte zwischen Bürstenhalter und Radial-Einschnitt zu überwinden. Deshalb wird von unsymmetrischen Nocken ausgegangen, die einen langsamen und stetigen Anstieg haben, um geringe Verstellkräfte durch großen Stellweg aufbringen zu können und einen abrupt abfallenden Endbereich, um den umfänglichen Verstellweg für den nächstfolgenden Nocken nicht zu verschenken.

Das Einsetzen und Verriegeln einer Zentrierhülse stirnseitig hinter der Ringscheibe für das Reinigen von Gewinden kleineren Ausmaßes umschreiben Anspruch 16 und Anspruch 17.

Die Erfindung wird in ihrem Verständnis anhand von Ausführungs**beispielen** vertieft. Dazu zeigt:

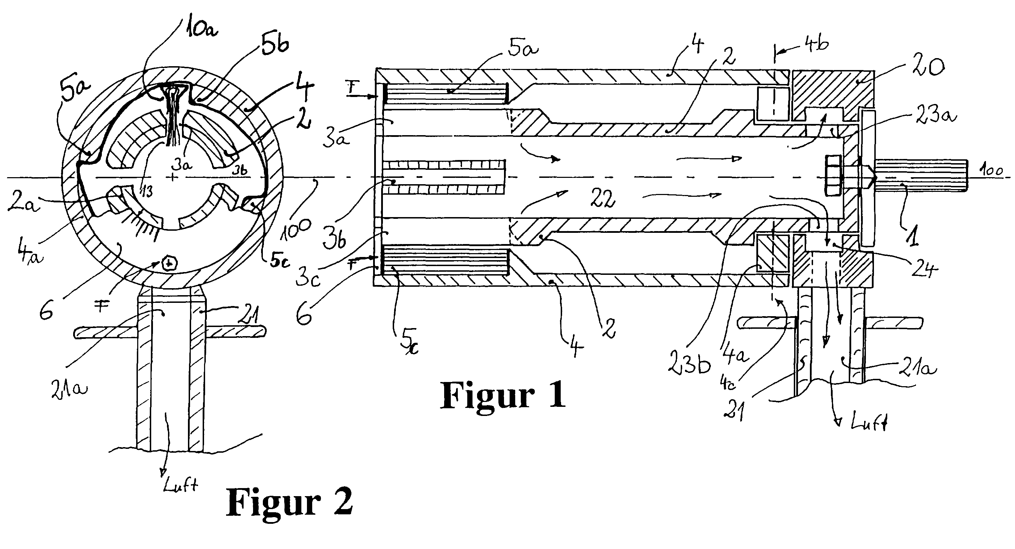

**Figur 1** einen Querschnitt eines Ausführungsbeispiels der erfindungsgemäßen Bürsten-Reinigungseinrichtung für Außengewinde mit den beiden erwähnten Hohlzylindern 2 und 4, wobei der Zylinder 2 der Bürstenträger ist und in seinem hinteren Ende einen nach außen weisenden Durchtrittskanal hat, der mit dem nach unten weisenden Luft-Absaugkanal 21a, 21 in Verbindung steht.
**Figur 2** ist eine Frontansicht desselben Ausführungsbeispiels, bei dem die Zylinder im Querschnitt dargestellt sind. Die Radial-Einschnitte sind in radialer Richtung eingeschnitten und weisen eine axiale Erstreckung auf, die der Bürstenleiste 10 entspricht, die auch im Schnitt von **Figur 1** erkennbar ist.

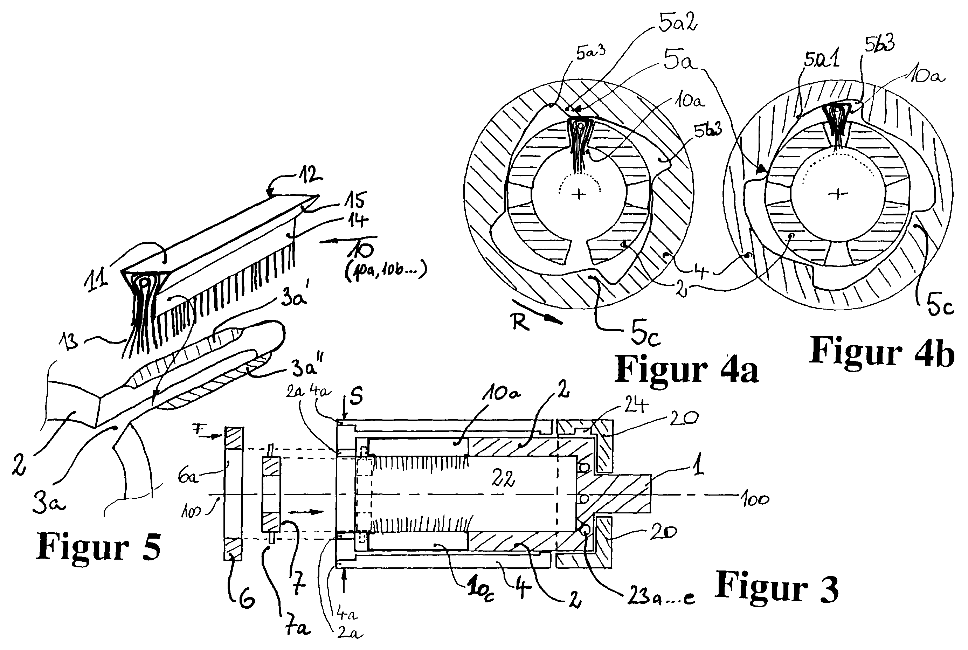

**Figur 3** stellt eine vergleichbare Schnittzeichnung zu **Figur 1** dar, jedoch mit vorderer abgenommener ringförmiger Lochscheibe 6. Sie kann von mehreren Schrauben F gehalten sein, die in den äußeren Verstellzylinder 4 stirnseitig eingreifen (vgl. **Figur 1**).
**Figur 4a und 4b** zeigen Axialschnitte in einer Ebene, die durch die Bürstenleisten geht und senkrecht auf der Zentralachse 100 steht (vgl. **Figur 3**). Dabei sind in zwei verschiedenen Winkelstellungen des Verstellzylinders 4 die Eingriffe der unsymmetrischen Nocken 5a, 5b ... an den jeweils zugeordneten Bürstenleisten 10a, 10b ... gezeigt, wie sie in dem jeweiligen Radialeinschnitt 3a, 3b ... des Zylinder-Bürstenträgers in Radialrichtung verstellbar sind. **Figur 4a** zeigt eine Bürstenposition, bei der ein kleiner Durchmesser eines Gewindebolzens gereinigt wird, **Figur 4b** zeigt eine Stellung der Bürstenleisten, in der ein Gewindebolzen mit großem Durchmesser gereinigt wird.

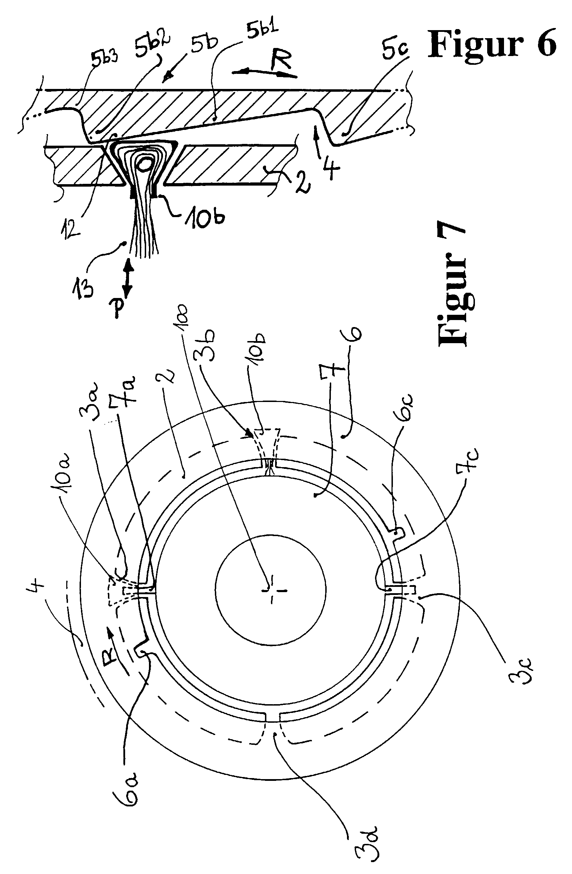

**Figur 5** zeigt eine Vergrößerung eines Radial-Einschnittes 3a mit konischer Zurichtung seines radial äußeren Bereiches, so daß die trapezförmigen Bürstenleisten 10 genauer in ihm geführt werden. Die Bürstenleiste 10a ist schematisch dargestellt und es ist angedeutet, wie sie in den Radialeinschnitt eingesetzt wird.
**Figur 6** ist eine Abwicklung des Umfanges der **Figur 4a** und zeigt in vergrößertem Maßstab den Eingriff des unsymmetrischen Nockens 5b an einer Längskante 12 des in **Figur 4a** obenliegenden Bürstenbereiches. Mit dem Pfeil P ist dabei die Verstellrichtung der Bürste 10a angedeutet, die sich ergibt, wenn der Nocken sich in Rechts-Links-Bewegung gemäß dem Pfeil R bewegt. Das entspricht in der abgewickelten Darstellung der **Figur 6** dem Winkelverstellen der **Figur 4a bzw. 4b.**
**Figur 7** zeigt eine Zentriereinrichtung 7, 7a, 7b, die stirnseitig einsetzbar ist.

**Figur 1** veranschaulicht das genannte erste Ausführungsbeispiel der Erfindung in Schnittdarstellung. Am rechten Zapfen 1 kann eine Antriebsmaschine, z.B. eine Bohrmaschine mit ihrem Bohrfutter kraftschlüssig angeflanscht werden. Der nach unten weisende Griff 21, mit innenliegendem Luftkanal 21a, kann als Halteelement für den Bürstenreiniger dienen, der aus zwei konzentrischen Rohrelementen 2, 4 aufgebaut ist. Am linken bildseitigen Ende - dem Stirnende - ist eine Nut 3b zum Einsatz einer Leistenbürste (vgl. **Figur 5**) dargestellt. Darüber und darunter liegen zwei Nuten in Seitenansicht 3a, 3c, wie aus der Aufsicht in **Figur 2** deutlicher wird. Die gestrichelten Bereiche der Nut 3b sind abgeschrägte Bereiche, die der radial eingeschnittenen Nut ein konisch nach innen weisendes Gepräge geben. Der im Nut-Außenbereich konisch nach innen weisende Teilbereich ist so gestaltet, daß er mit einer Leistenbürste 10 zusammenwirkt, also an dessen Form angepaßt ist.

Der Zapfen 1 (Schaft) steht in Verbindung mit dem hinteren geschlossenen Teil des Bürstenträgers 2, der das innenliegende zylindrische Rohrelement bildet. Eine Schraube verbindet das hintere stumpfe Ende des Bürstenträgers 2 mit dem Schaft 1. Am vorderen Ende - im Stirnbereich - sind die Bürsten in die radialen Einschnitte 3, 3a, 3b, 3c, 3d eingesetzt und können auf das Gewinde einwirken, das auf dem zu reinigenden Bolzen außenseitig angeordnet ist. Der Stehbolzen wird in Zentralachsen-Richtung 100 zu liegen kommen, während sich das Reinigungsgerät - geführt durch die Bürsten - über ihn stülpt. Entsprechend der Länge der Stehbolzen, die gereinigt werden müssen, kann die axiale Erstreckung des Reinigungsgerätes sein, was im wesentlichen den Zwischenbereich zwischen vorderem Bürstenende (Stirnseite) und hinterem Antriebsende betrifft. Hinsichtlich der Wirkung und der Funktion von Stahlbürsten, die von einem Reinigungsgerät drehend über einen gewindetragenden Stehbolzen geführt werden, und die dabei erzielte Nutgrund-Reinigung bei gleichzeitiger stabiler Führung des Reinigungsgerätes ohne wesentliche manuelle Kräfte sind in der deutschen Patentanmeldung P 40 37 944 detailliert erläutert, auf die Bezug genommen wird (vgl. die entsprechende deutsche OFFENLEGUNGSSCHRIFT, Spalte 1, Zeile 55 ff. und Spalte 4, Zeile 3 bis 35). Auch hinsichtlich der Gestalt des dort als Rohrkörper bezeichneten Bürstenhalters besteht Vergleichbarkeit, auf die dortige Beschreibung wird insoweit verwiesen.

Der stirnseitige Reinigungsbereich (Reinigungskopf) weist die vier nach innen weisenden Leistenbürsten 10 auf, die in den dafür vorgesehenen Nuten mit trapezförmiger Aufweitung am äußeren Bereich geführt sind. Es können entweder drei oder vier Nuten vorgesehen sein. Wenn ein geringerer radialer Stellbereich der Bürsten erwünscht ist, können auch mehr Bürsten vorgesehen sein, weil sich die Stelltiefe an der Steigung der unsymmetrischen Nocken 5a, 5b, 5c, 5d (kurz: 5) orientiert, die in **Figur 2** dargestellt sind. Man kann - je nach Grad der Verschmutzung und Korrosion des zu reinigenden Gewindes - entweder weiche oder harte Bürsten einsetzen, wobei die Härte durch Werkstoff der Borsten und deren Durchmesser bestimmt wird. Es können entsprechend dicke oder dünne Drähte sein, auch können Messing- oder Stahldrähte eingesetzt werden.

Der außenliegende Zylinder 4 ist die Verstelleinrichtung, die drehbar um das Innenrohr gelagert ist. Dazu ist ein toroidförmiger Ring 4a vorgesehen, der mit zwei verschiedenen Schrauben - auch anderweitigen Arretiereinrichtungen - an dem hinteren Teil des Verstellzylinders 4 fixiert ist. Das ist in **Figur 1** schematisch mit den beiden Mittenlinien 4b und 4c angedeutet. Die obenliegende Schraube 4b fixiert den Zylinder 4 an dem toroidförmigen Ring 4a mit etwa quadratischem Querschnitt. Die untenliegende Schraube 4c kann als Madenschraube ausgebildet sein und fixiert den toroidförmigen Ring 4a an dem innenliegenden Zylinder-Bürstenhalter 2 in einem Bereich, der von dessen hinterem Ende etwas nach vorne versetzt ist. Das Lösen der Schraube 4b ermöglicht das Abziehen des Zylinders 4 von dem toroidförmigen Ring 4a und das Reinigen des Ringraumes zwischen der Außenwand des Bürstenhalters 2 und der Innenwand des Verstellzylinders 4. Der toroidförmige Ring 4a ist an Schultern des Bürstenhalters gelagert (in vordere Axialrichtung) und an einem ebenfalls ringförmigen Teflon-Ringscheibe 20 (in hintere Axialrichtung) fixiert. Damit kann das Zylinder-Verstellorgan 4 - wenn die Schraube 4b eingesetzt ist - mit dem Toroid-Ring 4a gemeinsam auf dem innenliegenden Rohr 2 gedreht werden. Diese Drehung wird dann unterbunden, wenn die untenliegende Schraube 4c durch den Toroid-Ring 4a eine weitere Verstellung verhindert. Damit ist die Winkellage der beiden Zylinder 4, 2 gegeneinander fixiert und die in **Figur 2** näher erläuterte Eingriffsstellung der unsymmetrischen Nocken bestimmt, womit die innere Endlage der Borsten der Bürsten 10 festliegt. Selbstverständlich können die Bürstenleisten auch weiter nach innen fallen, sie würden aber von einem in dem Gerät aufgenommenen Stehbolzen sofort wieder radial auswärts verschoben werden, bis sie mit ihrem hinteren Rücken an dem jeweiligen Nocken - dessen ansteigender Flanke, wie durch die Schraube 4c definiert - fest anliegen.

Damit kann die Verstellbarkeit der Zylinder 4 und 2 die radiale Position der Bürsten 10 bestimmen. Die bestimmte Lage kann fixiert werden. Gleichzeitig kann der gesamte Zylinder 4 zu Reinigungszwecken und zum Bürstenwechsel abgezogen werden.

Erwähnt war das hintere toroidförmige Ringelement 20, das im Querschnitt einen quadratischen Außenbereich aufweist (wie der "Ring" 4a). Man kann es sich als geometrisch durch Drehung eines Quadrates um einen Mittenpunkt entstanden denken, welcher Mittenpunkt auf der Zentralachse 100 liegt. In dem Ringelement 20 ist innenliegend eine Nut eingebracht, die umlaufend gestaltet ist. Sie mündet an einem unteren Ende in einem Ringkanal, der in dem Absaugkanal 21a im Griffelement 21 mündet. Im Bereich zwischen toroidförmigem Ringelement 4a und hinterem Antriebszapfen 10 weist der Bürstenhalter 2 mindestens eine Bohrung 23; 23a ... auf, die durch seine dünne Zylinderwand reicht. Damit entsteht eine Verbindung zwischen dem inneren Hohlraum 22 des Bürstenträgers 2 zu dem Ringraum 24 im Quadrat-Toroid-Halter 20, die auch bei Drehung des Bürstenhalters 2 über den mit ihm durch eine Schraube verbundenen Antriebszapfen 1 erhalten bleibt.

Eine so erreichte Absaugmöglichkeit für Schmutz und Korrosionsbestandteile ist vorteilhaft, aber nicht zwingend.

Die teilweise geschnittene Aufsicht in **Figur 2** auf die Stirnseite des Bürstenreinigers, der in **Figur 1** im seitlichen Schnitt gezeigt ist, eröffnet einen Einblick in die Lage der Radialschlitze 3a, 3b, 3c, 3d, (im Folgenden kurz: 3). Sie liegen im Winkel von 90° am Umfang des rohrförmigen Bürstenhalters 2 verteilt uns sind vom vorderen stirnseitigen Rand ausgehend zu etwa einem Drittel der Länge des rohrförmigen Trägers axialerstreckend. Diese vordere Zone des Bürstenhalters 2 ist die Reinigungszone. Stirnseitig wird sie abgeschlossen durch eine Ringscheibe 6, die als Scheibe mit mittlerer Öffnung ausgebildet ist. Die ringförmige Scheibe 6 kann in zwei ringförmige Vertiefungen eingesetzt sein, die auf dem Bürstenträger 2 eine nach außen weisende Schulter 2a und auf dem Verstellzylinder 4 eine dieser zugeordnete, nach innen weisende Schulter 4a sind. So ergibt sich am stirnseitigen Ende - auch bei langen Bürstenträgern und Verstellorganen - eine gute stirnseitige Führung, des ansonsten nur am hinteren Ende im Ringelement 20 geführten Bürstenträgers 2. Auf der Ringscheibe 6 kann eine Skala (Nonius) angebracht sein, um die radiale Verstellung genau vornehmen zu können. Wird der Verstellzylinder gemeinsam mit der Ringscheibe 6 abgenommen, so fällt die stirnseitige Blockade - oder zumindest Teilblockade - der Radialeinschnitte 3 fort und die Bürsten 10 - von denen beispielhaft nur die obenliegende Leistenbürste 10a eingezeichnet ist - können durch Schütteln des Gerätes nach vorne herausfallen. Die Ringscheibe kann in Axialrichtung (vgl. Pfeil F) oder in Radialrichtung (vgl. Pfeil S in **Figur 3**) an dem Außenzylinder befestigt sein.

Im oberen Bereich der **Figur 2** ist die Ringscheibe 6 weggebrochen. Dadurch werden die unsymmetrischen Nocken 5, 5b, 5c (im Folgenden kurz: 5) sichtbar. Der unsymmetrische Nocken 5d liegt in **Figur 2** noch unter der dargestellten Ringscheibe 6. Jeweils ein unsymmetrischer Nocken 5 wirkt zusammen mit einer hinteren Kante der in der Radialausnehmung eingesetzten Bürstenleiste 10. Beispielhaft dargestellt ist das an dem unsymmetrischen Nocken 5a und der zugehörigen Bürstenleiste 10a, die im Radialeinschnitt 3a eingesetzt ist. Ein Verdrehen des Verstellzylinders 4, an dem die unsymmetrischen Nocken 5 fest angeordnet sind, oder aus dem sie herausgearbeitet wurden (beispielsweise durch Räumen) verändert die Anlagekante der Leistenbürste 10a in Radialrichtung und damit das innere Ende der Stahlborsten, die zum Reinigen in den inneren Hohlraum des Bürstenhalters 2 eingeführt werden. Bei geeigneter Abstimmung der Anzahl der umfänglichen Radialeinschnitte 3 zu dem Hub der unsymmetrischen Nocken 5 können große Bolzenbereiche mit demselben Reinigungsgerät bearbeitet werden. Im Beispiel eines mit vier Bürsten besetzten Bürstenträgers 2 wird ein Bereich von M10 bis M24 überstrichen, wenn die vier Bürstenleisten um jeweils 90° zueinander versetzt am Umfang verteilt angeordnet sind.

Werden mehr Bürstenleisten angeordnet, so ergibt sich eine bessere Zentrierung, allerdings wird der Verstellbereich geringer, da die Steigung der unsymmetrischen Nocken 5 auf einen kleineren Winkelbereich verteilt werden muß. In gleicher Weise kann bei Verwenden von nur drei am Umfang verteilten Bürstenleisten ein vergrößerter Stellbereich erzielt werden.

Wird der Durchmesser der Verstell- und Bürstenträger-Zylinder 2, 4 größer gewählt, so können mehr Nuten und Bürsten vorgesehen sein bei vergleichbarem Radial-Stellbereich.

Die **Figur 4a und 4b** sowie die **Figur 6** veranschaulichen das anhand **Figur 2** Gesagte detaillierter.

In **Figur 4a und 4b** ist derselbe Bürstenträger 2 und der dazu konzentrische Verstellzylinder 4 dargestellt, jedoch in zwei gegeneinander unterschiedlich verdrehten Winkelstellungen. Während **Figur 4a** die innerste Stellung der Bürstenleisten 10 zeigt, bei dem die Nocken 5 den maximalen radialen Verschiebeweg der Bürsten bewirken, zeigt **Figur 4b** die äußerste radiale Lage der Bürstenleisten 10. Der jeweilige Außendurchmesser eines mit der jeweiligen Einstellung reinigbaren Außengewindes eines Armaturenbolzens ist gepunktet eingezeichnet.

Zu einem jeweiligen unsymmetrischen Nocken 5 gehören drei Bereiche; ein Kuppenbereich, ein Senkenbereich und ein dazwischenliegender Steigungsbereich. Der Kuppenbereich 5a2 ist in **Figur 4a** im Eingriff und sorgt für die Stellung der Bürstenleiste bei kleinsten Stehbolzen-Durchmesser. Der unmittelbar umfänglich danebenliegende Bereich 5a3 kommt nicht mehr in Berührung mit der Bürstenleiste 10a, er kommt nur noch in Berührung mit der danebenliegenden (nicht dargestellten) Bürstenleiste 10d. Stattdessen führt der Steigungsbereich 5a1 von der Kuppe 5a2 zum nockenzugehörigen Muldenbereich 5b3 (Senke). Dieser Bereich 5b3 ist in **Figur 4b** in Eingriff mit der Bürstenleiste 10a gezeigt, wenn sie ihre radial äußerste Stellung erreicht und für das Reinigen des maximalen Bolzendurchmessers eingestellt ist.

Die Abwicklung der **Figuren 4a, 4b** zeigt **Figur 6**. Hier ist auch deutlich erkennbar, daß die in der Abwicklung linear gezeigte Steigung des Nockens, dargestellt ist hier 5b1, im rotationssymmetrischen Fall von **Figur 4a** zu einem kreisförmigen Steigungsbereich führt, dessen Mittelpunkt weit neben demjenigen der Mittelachse 100 liegt, zu dem Verstellzylinder 4 und Zylinder-Bürstenträger 2 konzentrisch sind. Der Kuppenbereich 5b2 geht abrupt in den Muldenbereich 5b3 über, über diesen Bereich wird eine Bürste nicht geführt, den Muldenbereich 5b3 erreicht dagegen nur die danebenliegende Bürstenleiste 10a (jedoch nicht dargestellt), den Kuppenbereich 5b2 hat im dargestellten Beispiel der **Figur 6** die Bürste 10b gerade erreicht. Ein Linearverstellen entlang dem Zweirichtungs-Vektor R führt zu einem dazu orthogonalen Verstellen P der Bürstenleiste 10b mit ihren Stahlborsten 13. Die Linearverstellung R und die dazu orthogonale Verstellbewegung P entsprechen im rotationssymmetrischen Fall der **Figur 4a** dem umfänglichen Verstellen und dem radialen Verlagern.

An einer schematischen **Figur 5** soll das Einsetzen einer jeweiligen Bürstenleiste 10 in einen Radialeinschnitt mit Axialerstreckung 3 gezeigt werden. Herausgezeichnet ist der Radialeinschnitt 3a mit dem zugehörigen Bürstenelement 10a. Erkennbar ist eine konisch nach innen weisende Abschrägung der radial äußeren aber umfänglich innenliegenden Kanten des Einschnittes 3a. Dazu passend ist die Bürstenleiste 10a geformt, die einen im Querschnitt trapezförmigen Rücken 11 aufweist, dessen eine außenliegende hintere Kante 12 diejenige ist, die in **Figur 6** im unmittelbaren Eingriff mit dem unsymmetrischen Nocken 5b gezeigt wurde. Die jeweiligen aufeinander (nach innen) zustrebenden Seitenwände 15 der Bürste 10a sind in ihrer Steigung der Abschrägung 3a', 3a'' der Nut 3a angepaßt. An die nach innen strebenden Wände 15 der Bürste 10a setzt sich nach unten ein in etwa geradlinig erstreckender Haltebereich 14 fort, mit dem die Stahlborsten 13 geführt und ausgerichtet werden. Dieser Bereich hat im Querschnitt etwa quadratische Gestalt, er paßt in seiner Form zu dem in Radialrichtung verbleibenden Nutbereich, der ohne Abschrägung 3a', 3a'' gestaltet ist. Die Abschrägung der Nut 3a kann nun so gewählt werden, daß sie bis an die radial innenliegenden Innenkanten der Nut reicht, so daß die Nut insgesamt keilförmig wird. Sie hat dann selbst eine Trapezform. Entsprechend werden die Bürstenleisten 10 ausgerichtet sein, mit einem nur schmalen - oder keinem - unteren Haltebereich 14. Die Seitenwände 15 des Trapezes haben dann eine geringere Steigung. So ist das beispielsweise in der **Figur 4a** und in der **Figur 6** dargestellt.

Abweichend von der dargestellten trapezförmigen Bürsten-Rückenform können auch im wesentlichen T-förmige Bürstenleisten Anwendung finden, die keine abgeschrägten Wände 15 - die die Seitenwände des Trapezrückens bilden - haben. Solche Bürsten gleiten einigermaßen in den vorgesehenen Radialeinschnitten 3a, allerdings erreichen sie nicht die mit den trapezförmig gestalteten Bürstenleisten 10 zur Verfügung gestellte besondere Leichtgängigkeit bei der Verstellbewegung.

Die konisch nach innen weisende Abschrägung kann sich bis an die Stirnseite des Bürstenhalters 2 erstrecken, wenn auch die **Figur 5** eine stirnseitige Verengung zeigt. Es ist umso günstiger, je weiter die Bürsten zum Stirnbereich hin erstreckt werden können, um nahe zum Schraubenkopf des Gewindes, das gereinigt wird, zu gelangen.

**Figur 3** zeigt ein etwas geändertes Ausführungsbeispiel gegenüber der **Figur 1**. Unverändert ist dagegen der Reinigungsbereich, der im vorderen Abschnitt des zylindrischen Bürstenträgers 2 liegt. Dieser ist umgeben von dem Verstellzylinder 4, in den vorderseitig die Ringscheibe 6 eingesetzt ist. Sie hat eine zentrale Öffnung, die so groß gestaltet ist, daß die Ringscheibe 6 zwischen den beiden Ring-Schultern 4a und 2a eingesetzt werden kann, um stirnseitig Bürstenhalter gegen Außenzylinder zu fixieren. Wird nun der Verstellzylinder 4 so weit umfänglich verstellt, daß die Bürsten ihre radial innerste Lage erreichen, so ist das Reinigungsgerät auf den kleinstmöglichen Durchmesser von einem zu reinigenden Armaturenbolzen eingestellt. Hierbei können sich Führungsprobleme ergeben, insbesondere dann, wenn nur drei umfängliche Bürstenleisten 10 vorgesehen sind. Das Gewinde kann sich durch die starken Zug- und Druckkräfte der Stahlborsten 13 im Gewinde des Stehbolzens aus der Mittenachse 100 verlagern und zwischen die Bürstenleisten gelangen. Eine vordere Führung ist ja in diesem Bereich noch nicht im Eingriff. Deshalb bietet sich der Einsatz einer Zentriereinrichtung 7 an, die zusätzlich zu der vorderen Ringscheibe 6 vorgesehen werden kann. Sie hat an ihrem äußeren Umfang zwei oder mehr Stifte oder Zapfen 7a, 7c die einen solchen umfänglichen Abstand aufweisen, daß sie genau in die Radialeinschnitte 3 passen, in die die Bürstenleisten 10 bereits eingeschoben wurden, dazu sind radialgerichtete Aussparungen 6a, 6c in der Ringscheibe 6 vorgesehen, die den Radial-Einschnitten von der Umfangslage her angepaßt sind. Dann wird eine Verdrehung des Verstellzylinders 4 gegen den Bürstenträger 2 vorgenommen, womit die stirnseitigen Öffnungen für die Zapfen 7a, 7c von der Ringscheibe 6 verschlossen werden. Die Zentriereinrichtung ist lösbar gehaltert. Der kleinere Zentrierring 7 ist damit so am vorderen stirnseitigen Ende der Reinigungseinrichtung fixiert, daß er nur bei einer vorgegebenen Winkellage von Verstellzylinder 4 zu Bürstenhalter 2 aus den Radial-Einschnitten 3 freikommt. Er kann sonst nicht mehr herausfallen.

Die umfänglichen Abmessung der beiden Ringe 6, 7 kann zueinander abgestimmt sein, so daß der Außendurchmesser des kleineren Führungsringes 7 zur inneren Aussparung des zweiten, die Stirnseite abschließenden (größeren) Ringes 6 angepaßt ist. Der kleinere Führungsring 7 kann andererseits einen solchen Außendurchmesser haben, daß er gerade in den lichten Raum des stirnseitigen Endes des Bürstenträgers 2 hineinpaßt.

Das verriegelnde Verschließen mit der Ringscheibe 6 am stirnseitigen Ende soll anhand von **Figur 7**, die eine stirnseitige Aufsicht zeigt, verdeutlicht werden. Mittig ist die Zentralachse 100 als Punkt erkennbar. Darum konzentrisch ist die Zentriereinrichtung 7, die als Hohlzylinderabschnitt ausgebildet sein kann. Sie weist radial erstreckend nach außen zwei Zapfen 7a, 7c auf, die den Bürsten 10a, 10c vorgelagert sind und in die dafür bestimmten Radial-Einschnitte von stirnseitig eingesetzt werden. Dazu war der Außenzylinder 4 in eine Umfangs-Winkelstellung gegenüber dem Bürstenträger 2 gebracht worden, bei dem zwei in Radialrichtung weisende Aussparungen 6a und 6c mit den zugeordneten Radial-Einschnitten 3a und 3c in Fluchtung gebracht wurden. Ist die Zentriereinrichtung 7 mit ihren Haltestiften 7a und 7c in den Radial-Einschnitten 3a und 3c eingesetzt, und zwar durch die Aussparungen 6a und 6c in der stirnseitigen Ringscheibe 6, so kann der Außenzylinder 4 verstellt werden, womit die stirnseitige Öffnung für die Zentriereinrichtung 7 verschlossen wird. Nun können auch Außengewinde gereinigt werden, die einen geringeren Durchmesser aufweisen, ohne daß Bürsten gewechselt werden mußten oder daß die gute Führungseigenschaft der nach innen ragenden Stahlborsten verloren geht. Hier übernimmt der Zentrierring 7 neben den weit nach innen reichenden Stahlborsten 13 der Bürsten 10 eine Zentrieraufgabe.

Die umfängliche Winkelzuordnung zwischen den Aussparungen 6a und 6c in der stirnseitigen Ringscheibe 6 und der jeweiligen Steigungshöhe der unsymmetrischen Nocken 5a, 5c bezüglich jedes Radial-Einschnittes 3a, 3c kann zueinander ausgerichtet sein. Dabei ist es günstig, wenn die Leistenbürsten 10 gerade um die Gewindetiefe des Außengewindes über den Innendurchmesser der Zentriereinrichtung 7 nach radial einwärts überstehen. Nur bei dieser Winkellage kann die Zentriereinrichtung 7 dann über die sich stirnseitig öffnenden Radial-Einschnitte (freigegeben durch die Aussparungen 6a und 6c) herausgenommen und eingesetzt werden.

Es können auch mehr als zwei Haltestifte 7a und 7c vorgesehen sein, ihre Zahl ist nach oben durch die jeweils vorgesehene Anzahl von Radial-Einschnitten 3 im Bürstenträger 2 vorgegeben, sie ist nach unten hin vorgegeben durch die Mindestzahl 2, die für eine axial genaue Halterung der Zentriereinrichtung nötig sind.

Die in **Figur 7** stirnseitig gezeigte Anbringung der Zentriereinrichtung 7 ist in der Figur 3 strichliniert angedeutet, dort ist sogar die stirnseitige Ringscheibe 6 von dem Außenzylinder 4 abgenommen, was in der Regel nicht erforderlich ist.

Gegenüber der **Figur 1** ist das Ausführungsbeispiel gemäß der **Figur 3** am antriebsseitigen Ende verändert. Der Anschlußzapfen 1 in **Figur 3** ist integral mit dem Bürstenträger 2 ausgebildet. Der gesamte Bürstenträger 1, 2 erhält damit im Querschnitt eine Y-Form. Im Übergangsbereich zwischen Anschlußstück 1 und zylindrischem Außenbereich, in den die Bürstenleisten 10 eingesetzt werden, sind Bohrungen 23a, 23b ... eingebracht, die winkelförmige Gestalt haben. Sie erstrecken sich radial so, daß sie in den umfänglichen Innenraum 24 des Teflon-Ringelementes 20 münden. Die axiale Erstreckung dieser Winkelbohrung ist so ausgestaltet, daß sie im Innenraum 22 des Bürstenträgers 2 münden. Damit wird eine Absaugung möglich, wenn der Ringraum 24 mit einem Absaugstutzen verbunden wird, wie beispielsweise in **Figur 1** dargestellt.

## Patentansprüche

1. **Rotations-Bürstenreinigungseinrichtung** zur Gewindereinigung;
(a) mit einem Zylinder-Bürstenhalter (2), der mindestens zwei, vorzugsweise vier, sich axial erstreckende Radialeinschnitte (3;3a bis 3d) zur Aufnahme von jeweils einer leistenförmigen Bürste (10;10a,10b) hat;
gekennzeichnet durch
(b) ein zum Zylinder-Bürstenhalter (2) konzentrisches Zylinder-Verstellorgan (4), das mindestens zwei, vorzugsweise vier, unsymmetrische Nocken (5;5a bis 5d) hat, die den jeweiligen Radial-Einschnitten (3) zugeordnet sind, zur radial gerichteten Verstellung der Leistenbürsten (10);
(c) einen Antriebs-Anschlußzapfen (1) in der Symmetrieachse (100) der beiden Zylinder (2,4), der an dem Zylinder-Bürstenhalter (2) angebracht ist, oder einen am Zylinder-Bürstenhalter (2) angebrachten Drehkraft-Kopplungs-Abschnitt, der konzentrisch zu der Symmetrieachse (100) der beiden Zylinder (2,4) orientiert ist.

2. Einrichtung nach Anspruch 1, bei der das Zylinder-Verstellorgan (4) radial außerhalb des Zylinder-Bürstenhalters (2) liegt, als Außengewinde-Reinigungsanordnung, oder der Zylinder-Bürstenhalter (2) radial außerhalb des konzentrischen Zylinder-Verstellorgans (4) angeordnet ist, als Innengewinde-Reinigungseinrichtung.

3. Einrichtung nach Anspruch 1 oder 2, bei dem der Zylinder-Bürstenhalter (2) und das Zylinder-Verstellorgan (4) gegeneinander um einen Winkel von etwa 360°/B verdrehbar sind, wobei B die Anzahl der Radial-Einschnitte (3) im Bürstenhalter (2) ist.

4. Einrichtung nach einem der vorhergehenden Ansprüche, bei der von einem Zylinder-Rumpfmaß des Zylinder-Verstellorgans in eine Radialrichtung die unsymmetrischen Nocken (5) stetig zu einer Kuppe (5b2) ansteigen (5b1), um von dort steil zum Rumpfmaß hin abzufallen (5b3), insbesondere sogleich nach Abfall mit einer erneuten stetigen Steigung (5b1) beginnen.

5. Einrichtung nach einem der vorhergehenden Ansprüche, bei der eine stetige Steigung (5b1) der Nocken (5) ein kreisförmig gekrümmter Verlauf mit einem gegenüber der Symmetrieachse (100) deutlich verlagerten Mittelpunkt ist.

6. Einrichtung nach einem der vorhergehenden Ansprüche, bei der die Radial-Einschnitte (3) in eine Radialrichtung, vorzugsweise nach außen, aufgeweitet sind, wobei sie insbesondere Trapezform im Querschnitt haben.

7. Einrichtung nach Anspruch 6, bei der zwischen vorderen Ende der Aufweitung mindestens eines Radialeinschnittes und dem Stirn-Ende des Bürstenhalters (2) ein kurzer quadratischer oder rechteckiger Nutbereich vorgesehen ist, der zur Stirnseite und zum aufgeweiteten Radialeinschnitt offen ist.

8. Einrichtung nach einem der vorhergehenden Ansprüche, bei der im innenliegenden Zylinder-Bürstenhalter (2) ein Hohlraum (22) vorgesehen ist, der in Strömungs-Verbindung mit einem Luftabsaugstutzen (21) steht, der an einem Ringelement (20) am antriebsseitigen Ende des Bürstenhalters (2) vorgesehen ist.

9. Einrichtung nach Anspruch 8, bei der
(a) im Ringelement (20) eine innenliegende, nach innen offene Ringnut (24) angeordnet ist, die mit einem Absaugkanal (21a) des Luftabsaug-Stutzens (21) in ständiger Verbindung steht,
(b) im Zylinder-Bürstenhalter (2) mindestens eine Öffnung (23;23a,23b ...) vorgesehen ist, die axial auf die Ringnut (24) ausgerichtet ist.

10. Einrichtung nach einem der vorigen Ansprüche, bei der am stirnseitigen Ende von Zylinder-Bürstenhalter (2) und Zylinder-Verstellorgan (4) eine zentral offene, die Radial-Einschnitte (3a,3b,3c,3d) stirnseitig etwa abdeckende Ringscheibe (6) vorgesehen ist, deren Öffnung etwas größer als der kreisförmige Bereich ist, der im Bürstenhalter-Innenraum verbleibt, wenn die in den Radial-Einschnitten angeordneten Bürsten ihre äußerste Stellung erreicht haben.

11. **Verfahren** zum stufenlosen Verändern des Radial-Eingriffspunktes von Leistenbürsten (10;10a,10b ...) in einer handhabbaren Reinigungseinrichtung nach einem der Ansprüche 1 bis 10, bei dem zwei konzentrische zylinderförmige Organe (2,4) gegeneinander um einen begrenzten Winkel (360°/B) verstellt werden, um je einen radialunsymmetrischen Stellnocken (5,5a bis 5d) auf je einen Leistenbürsten-Rücken (11;11a ...) zu drücken und mit einer umfänglichen Verstellung (R) der Zylinderorgane (2,4) alle Leistenbürsten (10) in ihrer radialen Lage (P) zu verändern.

12. Einrichtung gemäß einem der Ansprüche 1 bis 10 mit mehreren leistenförmigen Bürsten, die einen Bürstenrücken (11) und eine Borstenzeile (13) aus vom Bürstenrücken her zusammengehaltenen Messing- oder Stahlborsten (13) aufweisen, bei denen
(a) der Bürstenrücken (11) im Querschnitt trapezförmig gestaltet ist;
(b) das schmale Ende des trapezförmigen Querschnitts in einen im Querschnitt etwa rechteckigen Borsten-Haltebereich (14) übergeht.

13. Einrichtung nach Anspruch 12, bei der eine Längskante des breiteren Endes des trapezförmigen Bürstenrückens (11,15) eine scharfe Kante (12) zur gleitenden Anlage eines Nockens (5) des Zylinder-Verstellorgans (4) aufweist.

14. Einrichtung nach Anspruch 12 oder Anspruch 13, bei der der Bürstenrücken aus glasfaserverstärktem Kunststoff ist.

15. **Rotations-Bürstenreinigungseinrichtung** zur Gewindereinigung an Armaturen,
(a) mit einer Symmetrieachse (100), in der vorzugsweise ein Antriebs-Anschlußzapfen (1) angeordnet ist;
(b) mit einem radial innenliegenden Zylinder-Bürstenhalter (2), der mindestens zwei, vorzugsweise vier, Radial-Einschnitte (3;3a bis 3d) zur Aufnahme von Bürstenleisten oder Leistenbürsten (10) hat;
(c) mit einem dazu konzentrischen Zylinder-Verstellorgan (4), das mindestens zwei, vorzugsweise vier, unsymmetrische Nocken (5;5a bis 5d) hat, die den jeweiligen Radial-Einschnitten (3) umfänglich zugeordnet sind.

16. Einrichtung nach Anspruch 10, bei der
(a) die zentral offene Ringscheibe (6) lösbar an der Stirnseite des Zylinder-Verstellorganes (4) angebracht ist;
(b) der Ringbereich der Ringscheibe (6) mindestens zwei nach innen offene Aussparungen (6a,6c) aufweist, die umfänglich mindestens zwei Radial-Einschnitten (3a,3c) zugeordnet sind und die sich in Radialrichtung nur so weit erstrecken, daß sie vor dem Außenmaß des innenliegenden Zylinder-Bürstenhalters (2) enden.

17. Einrichtung nach Anspruch 15 oder 16, bei der
(a) ein stirnseitig anbringbarer Zentrierring (7) mit mindestens zwei - sich radial nach außen erstreckenden - Haltestiften (7a,7c) versehen ist, die umfänglich mindestens zwei Radial-Einschnitten (3a,3c) des Zylinder-Bürstenhalters (2) zugeordnet sind;
(b) die Länge der Haltestifte (7a,7c) so bemessen ist, daß sie in radialer Richtung nicht weiterreichen als eine Radialerstreckung von bzw. der Aussparungen (6a,6c) in der stirnseitigen Ringscheibe (6) und dabei kürzer als die radiale Tiefe der korrespondierenden Radial-Einschnitte (3a,3c) des Zylinder-Bürstenhalters (2) sind.

## Claims

1. **Rotating brush cleaning device** for cleaning threads
(a) comprising a cylindrical brush holder (2) having at least two, preferably four, radial incisions (3; 3a to 3d) extending in axial direction for receiving one strip-shaped brush (10; 10a, 10b) each,
characterized by
(b) a cylindrical adjustment means (4) being concentric to the cylindrical brush holder (2), which cylindrical adjustment means (4) comprises at least two, preferably four, asymmetrical cams (5; 5a to 5d), which are associated to the respective radial incisions (3), for adjusting the strip-shaped brushes (10) in radial direction;
(c) a connecting drive spigot (1) being located in the symmetrical axis (100) of the two cylinders (2, 4), which spigot is arranged at the cylindrical brush holder (2), or a torque coupling section arranged at the cylindrical brush holder (2), which section is concentrically oriented towards the symmetrical axis (100) of the two cylinders (2, 4).

2. The device according to claim 1, in which the cylindrical adjustment means (4) is arranged radially outwardly of the cylindrical brush holder (2) as an external-thread cleaning array, or the cylindrical brush holder (2) is arranged radially outwardly of the concentric cylindrical adjustment means (4) as an internal-thread cleaning array.

3. The device according to claim 1 or 2, in which the cylindrical brush holder (2) and the cylindrical adjustment means (4) are adapted to be counter-rotated by an angle of approx. 360°/B, wherein B is the number of the radial incisions (3) in the brush holder (2).

4. The device according to any one of the preceding claims, in which the asymmetrical cams (5) continuously ascend (5b1) from a dimension of the cylindrical body of the cylindrical adjustment means in a radial direction towards a summit (5b3) in order to descend (5b2) from there steeply towards the body dimension and to begin, especially directly after the descent, to ascend (5b1) again continuously.

5. The device according to any one of the preceding claims, in which the continuous ascent (5b1) of the cams (5) is a circularly curved course having a central point which is clearly displaced with regard to the symmetrical axis (100).

6. The device according to any one of the preceding claims, in which the radial incisions (3) are widened in a radial direction, preferably towards the outside, and especially have a trapezoidal cross-section.

7. The device according to claim 6, in which a short square or rectangular groove section is provided between the front end of the widening of at least one radial incision and the front end of the brush holder (2), which groove section is open towards the front end and towards the widened radial incision.

8. The device according to any one of the preceding claims, in which a cavity (22) is provided within the internal cylindrical brush holder (2), which cavity (22) is in flow connection with an air suction tube (21), which is provided at an annular element (20) located at end of the brush holder (2) facing the drive means.

9. The device according to claim 8, in which
(a) an internal, inwardly open annular groove (24) is arranged within the annular element (20), which annular groove (24) is in permanent connection with a suction duct (21a) of the air suction tube (21),
(b) at least one opening (23; 23a, 23b ...) is provided within the cylindrical brush holder (2), which opening is axially oriented towards the annular groove (24).

10. The device according to any one of the preceding claims, in which a centrally open ring disk (6) is provided at the front end of the cylindrical brush holder (2) and the cylindrical adjustments means (4), which ring disk (6) about covers the radial incisions (3a, 3b, 3c, 3d) at the front end, the opening of the ring disk being somewhat bigger than the circular section remaining in the interior space of the brush holder when the brushes, which are arranged in the radial incisions, have reached their outermost position.

11. A **method** for continuously altering the point of radial engagement of strip-shaped brushes (10; 10a, 10b ...) in an operable cleaning device according to any one of claims 1 to 10, in which two concentric cylindrical means (2, 4) are displaced by a limited angle (360°/B) counter to each other, in order to press one radially asymmetrical adjustment cam (5, 5a to 5d) onto one strip-shaped brush back (11; 11a ...) and to alter the radial position (P) of all strip-shaped brushes (10) by means of a circumferential displacement (R) of the cylindrical means (2, 4).

12. The device according to any one of claim 1 to 10, having a plurality of strip-shaped brushes comprising a brush back (11) and a row of filaments (13) of brass or steel filaments (13) held together by the back of the brush, wherein (a) the brush back (11) has a trapezoidal cross-section; (b) the narrow end of the trapezoidal cross-section changes into an filament-holding section (14) of about rectangular cross-section.

13. The device according to claim 12, in which a longitudinal edge of the wider end of trapezoidal brush back (11, 15) has a pointed edge (12) for sliding abutment of a cam (5) of the cylindrical adjustment means (4).

14. The device according to claim 12 or 13, in which the back of the brush is made of glass-fibre reinforced plastic material.

15. **A rotating brush cleaning device** for cleaning threads on mountings,
(a) having a symmetrical axis (100) in which preferably one connecting drive spigot (1) is arranged;
(b) having a radially internal cylindrical brush holder (2), which comprises at least two, preferably four, radial incisions (3; 3a to 3d) for receiving brush strips or strip-shaped brushes (10);
(c) having a cylindrical adjustment means (4) being concentric thereto and comprising at least two, preferably four, asymmetrical cams (5; 5a to 5d), which are circumferentially associated to the respective radial incisions (3).

16. The device according to claim 10, in which
(a) the centrally open ring disk (6) is releasably mounted to the front end of the cylindrical adjustment means (4);
(b) the annular section of the ring disk (6) comprises at least two inwardly open recesses (6a, 6c) which are circumferentially associated to at least two radial incisions (3a, 3c) and which extend in the radial direction only so far that they terminate prior to the overall dimension of the internal cylindrical brush holder (2).

17. The device according to claim 15 or 16, in which
(a) an eccentric ring (7), adapted to be arranged at the front end, is provided with at least two - radially outwardly extending - holding pins (7a, 7c), which are circumferentially associated to at least two radial incisions (3a, 3c) of the cylindrical brush holder (2);
(b) the length of the holding pins (7a, 7c) is such that they do not extend any further in the radial direction than a radial extension from or of the recesses (6a, 6c) in the front end ring disk (6) and at the same time being shorter than the radial depth of the corresponding radial incisions (3a, 3c) of the cylindrical brush holder (2).

## Revendications

1. **Dispositif pour nettoyer des brosses à rotation** pour nettoyer des filets;
(a) avec un appui de brosse cylindrique (2), qui a au moins deux, de préférence quatre, s'axialement étendant creux radials (3;3a-3d) pour le logement d'une brosse respective sous forme d'une baguette (10;10a,10b);
characterisé en
(b) un organ d'ajustement cylindrique (4) étant concentrique à l'appui de brosse cylindrique (2), qui a au moins deux, de préférence quatre, cames (5;5a-5d) asymétriques, qui sont affectées aux creux radials (3) respectifs pour la radial ajustage des brosses sous forme d'une baguette (10);
(c) un tenon de raccordement de commande (1) dans l'axe de symétrie (100) des deux cylindres (2,4), qui est ajouté à l'appui de brosse cylindrique (2), ou une partie de force rotatrice de couplage ajoutée à l'appui de brosse cylindrique (2), qui est orientée concentriquement à l'axe de symétrie (100) des deux cylindres (2,4).

2. Dispositif selon la revendication 1, avec
l'organ d'ajustement cylindrique (4) se trouvant radialement à l'extérieur de l'appui de brosse cylindrique (2), comme disposition à nettoyer pour des filets extérieur, ou l'appui de brosse cylindrique (2) étant disposé radialement à l'extérieur du concentrique organ d'ajustement cylindrique (4), comme disposition à nettoyer pour des filets femelle.

3. Dispositif selon la revendication 1 ou 2, avec
l'appui de brosse cylindrique (2) et l'organ d'ajustement cylindrique (4) étant réglables l'un contre l'autre d'un angle d'environ 360°/B, ce qui B étant le nombre des creux radials (3) dans l'appui de brosse (2).

4. Dispositif solon une des précédent revendications, avec
les cames asymétriques (5) s'élévant (5b1) permanentement d'une dimension du corps cylindrique de l'organ d'ajustement en direction radiale vers un sommet (5b2), afin de tomber (5b3) rapidement vers la dimension du corps, en particulier commençant sans attendre après être tombé à nouveau avec une permanent pente (5b1).

5. Dispositif selon une des précédent revendications, avec
une permanent pente (5b1) des cames (5) étant une circulaire allure courbe avec un centre distinctement en déport comparé à l'axe de symétrie (100).

6. Dispositif selon une des précédent revendications, avec
les creux radials (3) étant élargis en une direction radiale, de préférence à l'extérieur et notamment ayant la forme d'un trapèze en coupe transversale.

7. Dispositif selon la revendication 6, avec une court zone de rainure, carré ou rectangulaire, étant prévue entre l'extrémité de devant de l'élargissement au moins d'un creux radial et l'extrémité de la face de l'appui de brosse (2) et étant ouvert vers le côté de devant et le creux radial élargi.

8. Dispositif selon une des précédent revendications, avec un espace vide (22) étant prévu dans l'appui de brosse cylindrique (2) intérieur, étant en connexion de courant avec un tuyau d'aspiration d'air (21), qui est prévu à un élément annulaire (20) à l'extrémité du côté de commande de l'appui de brosse (2).

9. Dispositif selon la revendication 8, avec
(a) une intérieur rainure annulaire (24) ouvert à l'intérieur étant disposée dans l'élément annulaire (20) et étant en connexion permanente avec un égout d'aspiration (21a) du tuyau d'aspiration d'air (21).
(b) au moins une ouverture (23;23a,23b ...) étant prévue dans l'appui de brosse cylindrique (2), et étant braquée axialement sur la rainure annulaire (24).

10. Dispositif selon une des précédent revendications, avec
un, dans le centre ouvert, à peu près couvrant sur la face les creux radials (3a,3b,3c,3d), disque annulaire (6) ètant prévu à l'extrémité du côté de devant de l'appui de brosse cylindrique (2) et de l'organ d'ajustement cylindrique (4) et (le disque annulaire) ayant une ouverture un peu plus grand que la section annulaire, qui reste dans l'intérieur de l'appui de brosse, quand les brosses disposées dans les creux radials ont obtenu leur position extrême.

11. **Procédé** pour la variation progressive du point de connexion radial des brosses sous forme d'une baguette (10;10a,10b ...) en un opérable dispositif à nettoyer selon une des revendications 1-10, avec
deux concentrique, cylindrique organs (2,4), qui soient réglés d'un angle limité (360°/B), afin de presser chacune came radialement asymétrique contre une respectif partie dorsale de brosse sous forme d'une baguette (11;11a ...) et de varier la position radiale (P) de toutes les brosses sous forme d'une baguette (10) avec un règlement (R) autour des organs cylindriques (2,4).

12. Dispositif selon une des revendications 1 à 10, avec plusieurs brosses sous forme d'une baguette, qui aient une partie dorsale de brosse (11) et une rangée de soies (13) comprimées par des soies en laiton ou en acier (13), avec
(a) la partie dorsale de brosse (11) sous forme d'un trapèze en coupe transversale;
(b) l'extrémité étroite de la coupe transversale sous forme d'un trapèze mêlant à une section d'appui de brosse (14), qui est à peu près rectangulaire en coupe transversale.

13. Dispositif selon la revendication 12, avec
une arête longitudinale de la plus large extrémité de la partie dorsale de brosse (11,15) sous forme d'un trapèze, ayant une arête vive (12) pour la fixation glissante d'une came (5) de l'organ d'ajustement cylindrique (4).

14. Dispositif selon la revendication 12 ou revendication 13, avec la partie dorsale de brosse en matière artificielle renforcée par fibre de verre.

15. **Dispositif pour nettoyer des brosses à rotation** pour nettoyer des filets des armatures,
(a) avec un axe de symétrie (100), dans lequel est disposé de préférence un tenon de raccordement de commande (1);
(b) avec un radial intérieur appui de brosse cylindrique (2), qui a au moins deux, de préférence quatre, creux radials (3;3a-3d) pour le logement des baguettes de brosse ou des brosses sous forme d'une baguette (10);
(c) avec un concentrique organ d'ajustement cylindrique (4) à cela, qui a au moins deux, de préférence quatre, cames asymétriques (5;5a-5d), qui sont affectés autour du périmètre des creux radials (3) respectifs.

16. Dispositif selon la revendication 10, avec
(a) le central ouvert disque annulaire (6) étant démontable monté sur le côté de devant de l'organ d'ajustement cylindrique (4);
(b) la section annulaire du disque annulaire (6) ayant au moins deux évidements (6a,6c) ouverts à l'intérieur, qui sont affectés autour du périmètre à au moins deux creux radials (3a,3c) et qui s'étendent en direction radiale seulement de cette façon, qu'ils finissent devant la dimension d'encombrement de l'intérieur appui de brosse cylindrique (2).

17. Dispositif selon la revendication 15 ou 16, avec
(a) une bague de centrage (7) montable au côté de devant étant munie au moins de deux - se radialement étendant à l'extérieur - chevilles d'arrêt (7a,7c), qui sont affectées autour du périmètre à au moins deux creux radials (3a,3c) de l'appui de brosse cylindrique (2);
(b) la longueur des chevilles d'arrêt (7a,7c) étant si dimensionnée, qu'elles ne s'étendent en direction radiale que les évidements (6a,6c) s'étendent dans le disque annulaire (6) sur la face et de plus qu'elles sont plus courtes que la profondeur radiale des respectif creux radials (3a,3c) de l'appui de brosse cylindrique (2).
